# EUROPÄISCHE PATENTSCHRIFT

(11) **EP 1 871 491 B1**
(45) Veröffentlichungstag und Bekanntmachung des Hinweises auf die Patenterteilung: **02.09.2009**
(21) Anmeldenummer: 06742672.6
(22) Anmeldetag: 13.04.2006
(51) Int. Cl.: A63B 9/00

(54) **Seilnetzwerk mit einer Seilspreizvorrichtung**
Rope network with rope spreading device
Trellis de cables avec dispositif d'écartement de cables

(30) Priorität: 13.04.2005 DE 102005017774; 03.06.2005 DE 102005026412; 13.04.2005 DE 202005006174 U; 03.06.2005 DE 202005009003 U; 22.03.2006 DE 202006004853 U
(43) Veröffentlichungstag der Anmeldung: 02.01.2008
(73) Patentinhaber: Berliner Seilfabrik GmbH & Co., 13407 Berlin (DE)
(72) Erfinder: KÖHLER, Karl-Heinz, 13509 Berlin (DE)
(74) Vertreter: Gulde, Klaus W.
(86) Internationale Anmeldenummer: PCT/EP2006/003785
(87) Internationale Veröffentlichungsnummer: WO 2006/108716

(56) Entgegenhaltungen:
- EP-A- 1 508 350
- DE-A1- 2 064 791
- DE-U- 7 312 204

## Beschreibung

Die Erfindung bezieht sich auf ein Seilnetzwerk mit einer Seilspreizvorrichtung.

Als besonders erfolgreich bei der Gestaltung von Spielplätzen haben sich zwei- und dreidimensionale Netzwerke aus Seilnetzen, die mit variablen Gerüstsystemen kombiniert werden, erwiesen. Mittels dieser Netzwerke lassen sich die unterschiedlichsten Spielwelten in Verbindung mit räumlichen Strukturen, die die körperliche Bewegung der Kinder fördern, darstellen. Die aus verschiedenen Seilen bestehenden Netzwerke werden innerhalb eines vorgegebenen Gerüstsystemes gespannt, wobei eine große Flexibilität der Gerüste dadurch erzielbar ist, dass einzelne Gerüststangen mittels kugelförmiger Hohlkörper miteinander verbunden werden und dadurch viele interessante, geometrische Formen geschaffen werden können. Innerhalb dieser Gerüste werden dann durch Befestigungen an oder in den hohlkugelförmigen Körpern und an den Gestängen die Seilnetze befestigt und gespannt.

In der Schrift DE 73 12 204 U wird ein räumliches Seilnetz beschrieben, bei dem die die Kontur des Netzes bestimmenden Elemente Seile sind, die von innerhalb des Netzes angeordneten Stützstäben gehalten werden. Das Nezt besteht ganz oder teilweise aus Seilringen. Die äußeren Seile des Netzes werden von den Seilringen umspannt. Die Stützstäbe besitzen keine weiteren Elemente, die die äußeren Seile an den spitz zulaufenden Seilenden auf Abstand halten.

Besondere Konstruktionen von Raumnetzstrukturen bestehen darin, dass von Stützmasten ausgehend die Seile räumlich orientiert und gespannt werden. Die im Toppunkt eines Stützmastes aus geometrischen Gründen spitz zusammenlaufenden Abspannseile werden in der Regel über Spannschlösser im Bodenbereich bei den Fundamentpunkten gespannt. Aufgrund der im Toppunkt spitz zusammenlaufenden Abspannseile wird im oberen Bereich des Stützmastes das eigentliche Spielvolumen bei den herkömmlich abgespannten Spielraumnetzen immer geringer. Der Nachteil des geringeren Spielvolumens, insbesondere im oberen und mittleren Bereich eines Stützmastes, ist bei Spielraumnetzen mit einem zentralen Mittelmast besonders augenfällig.

Die Erfindung macht es sich zur Aufgabe, diese Nachteile, nämlich das mangelnde Spielvolumen, zu beseitigen und zusätzlich eine Möglichkeit zu schaffen, die Spannung der Abspannseile zu variieren.

Die Lösung der Aufgabe erfolgt mit den Merkmalen des Anspruches 1. So ist das erfindungsgemäße Seilnetzwerk mit außen verlaufenden Abspannseilen, wobei die Abspannseile in einem Toppunkt eines innerhalb des Seilnetzwerkes angeordneten Stützmastes spitz zulaufen, dadurch gekennzeichnet, dass das Seilnetzwerk mindestens eine, am Stützmast und an mindestens einem Abspannseil angeordnete Seilspreizvorrichtung aufweist.Die Seilspreizung bzw. Seilspreizvorrichtung lenkt das Abspannseil so ab, dass zwischen den Abspannseilen und dem zentralen Stützmast ein größeres zum Klettern und Spielen nutzbares Volumen entsteht. Mittels der Seilspreizung können vorteilhafterweise der Grad der Spreizung und die Spannung der Abspannseile variiert werden.

Vorteilhafte Weiterbildungen der Erfindung sind in den Unteransprüchen angegeben.

So ist die Seilspreizvorrichtung in einer vorteilhaften Ausgestaltung der Erfindung als ein am Stützmast und am Abspannseil fixierter Spreizstab mit einer Seilfixierung und einer Spreizstabhalterung ausgebildet. Der Spreizstab ist dabei so zwischengeklemmt, dass er gegenüber dem ursprünglichen Verlauf das Abspannseil vom Stützmast wegdrückt, so dass die Spielvolumenvergrößerung eintritt. Hierbei ordnen sich die Spreizstäbe vorteilhaft, sowohl optisch als auch funktionell, d.h. als Teil des Klettergerüstes nutzbar, in das Seilnetzwerk ein.

In einer weiteren Ausgestaltung der Erfindung sind der Spreizstab abspannseilseitig an einer Seilfixierung verschiebbar und stützmastseitig um einen Drehpunkt einer am Stützmast befindlichen Spreizstabhalterung gelenkig angeordnet. Dadurch ist es vorteilhafterweise möglich, durch Veränderung des Winkels zwischen dem Stützmast und dem Spreizstab die Verlaufsrichtung der Abspannseile zu verändern.

Eine weitere vorteilhafte Ausgestaltung der Erfindung sieht vor, dass die Spreizstabhalterung am Stützmast verschiebbar fixiert ist. Die Verschiebbarkeit der Spreizstabhalterung am Stützmast in axialer Richtung ermöglicht es, die Spreizung der Abspannseile in unterschiedlicher Position am Stützmast vorzunehmen.

Eine weitere vorteilhafte Ausgestaltung der Erfindung ist dadurch gekennzeichnet, dass der Spreizstab in axialer Richtung verlänger- und verkürzbar ausgebildet ist. Aufgrund der Möglichkeiten, die Länge des Spreizstabes zwischen Stützmast und Abspannseil zu verändern, ist es möglich, zusätzlich auf die Spannung der Abspannseile Einfluss zu nehmen bzw. über Veränderung des Grades der Spreizung das Spielvolumen zu verändern.

Die Erfindung wird anhand eines Ausführungsbeispieles und einer Zeichnung näher erläutert.

Es zeigen
- Fig. 1: ein räumliches Raumnetz mit Stützmast und einer Seilspreizvorrichtung im oberen Bereich,
- Fig. 2: ein räumliches Netzwerk mit einem Stützmast und Seilspreizvorrichtungen im oberen und im mittleren Bereich des Stützmastes,
- Fig. 3: eine detaillierte Darstellung der Seilspreizvorrichtung,
- Fig. 4: eine Detaildarstellung der Seilfixierung des Spreizstabes und
- Fig. 5: eine Schnittdarstellung der Seilfixierung.

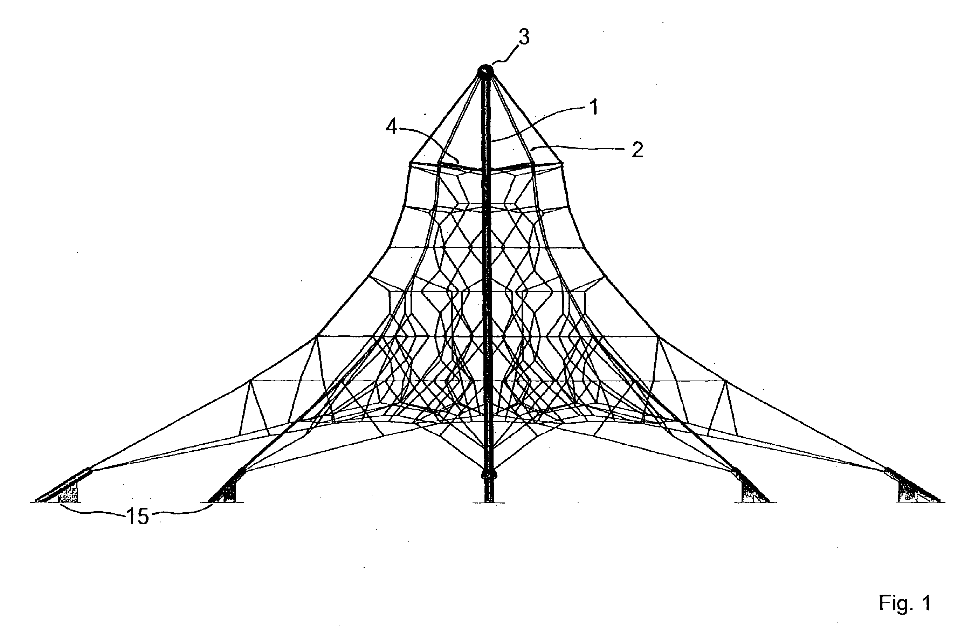

In Fig. 1 ist ein Raumnetzwerk, bei dem ein Stützmast 1 als Mittelmast ausgebildet ist, dargestellt. Abspannseile 2 laufen an einem Toppunkt 3 des Stützmastes 1 zusammen und sind am Boden mittels Bodenspanner 15 fest verankert. Mehrere Seilspreizungen 4 sind im oberen Bereich des Stützmastes 1, nämlich für jedes Abspannseil 2 eine Seilspreizung 4, angeordnet. Dadurch werden die ursprünglich spitz zusammenlaufenden Abspannseile 2 nach außen im Spreizbereich gedrückt, wodurch vorteilhafterweise ein größeres Spielvolumen entsteht. In den zwischen den Abspannseilen 2 angeordneten Seilnetzstrukturen haben spielende Kinder mehr Bewegungsfreiheit.

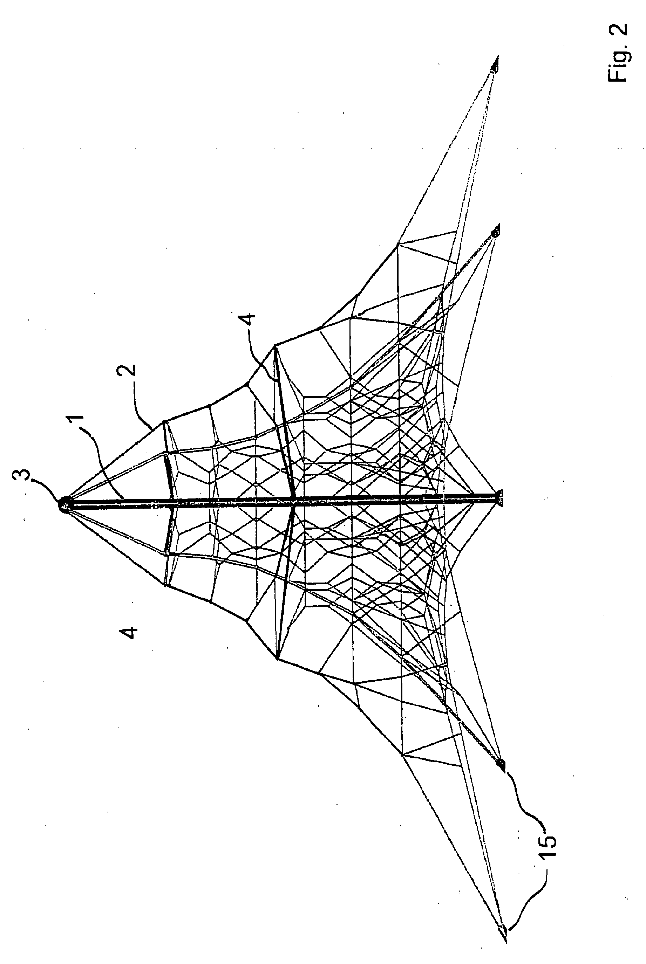

Fig. 2 zeigt ein weiteres räumliches Netzwerk aus Seilnetzen mit einem Stützmast 1, der auch hier als Mittelmast ausgebildet ist. Die außen verlaufenden Spannseile 2 werden am Toppunkt 3 des Stützmastes 1 und an den Bodenspannern 15 gehaltert. Im mittleren Bereich des Stützmastes 1 sind weitere Seilspreizungen 4 entsprechend der Anzahl der Abspannseile 2 angeordnet, die zu einer weiteren Vergrößerung des Spielvolumens führen. Die Seilspreizungen 4 sind so ausgeführt, dass sie sich optisch in die bestehenden, räumlichen Seilnetzstrukturen harmonisch einfügen.

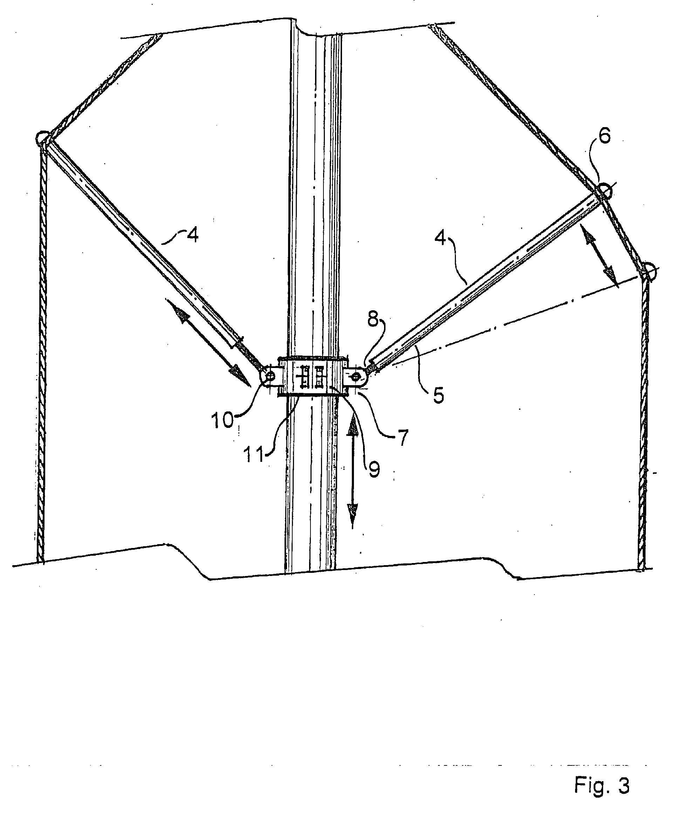

In Fig. 3 ist beispielhaft die Ausführung einer Seilspreizung 4 dargestellt. Die Seilspreizung 4 weist einen Spreizstab 5 auf, der abspannseilseitig an einer Seilfixierung 6 und stützmastseitig an einem Drehpunkt 10 einer Spannmanschette 9 gehaltert ist. An der Spannmanschette 9 sind Drehpunkte 10 befestigt, die eine gelenkige Bewegung des Spreizstabes 5 ermöglichen. Eine Stabverlängerung 8 ermöglicht eine axiale Verlängerung oder Verkürzung des Spreizstabes 5 und damit eine Variierung des Grades der Spreizung und der Seilspannung des Abspannseiles 2. Die Stabverlängerung 8 kann beispielsweise als Gewindestange ausgebildet sein, die im Spreizstab 5 heraus- und hereindrehbar angeordnet ist.

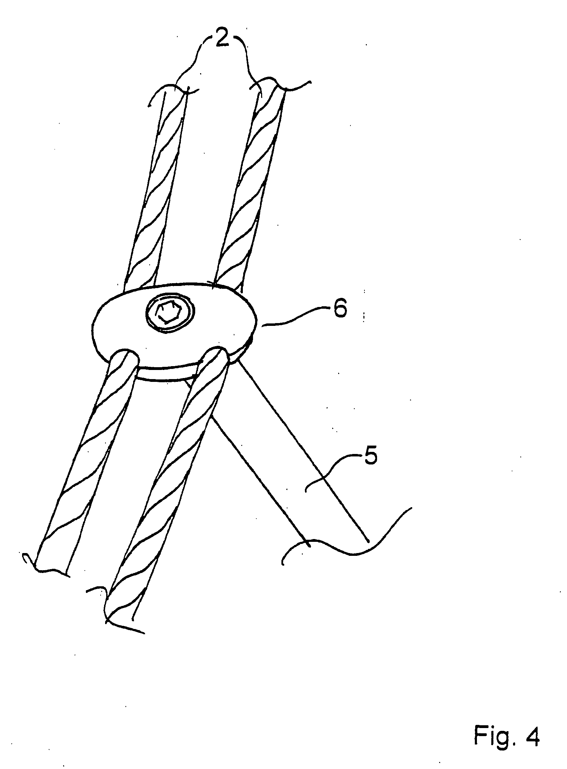

Fig. 4 zeigt beispielhaft die Seilfixierung 6 des Spreizstabes 5, wobei das Abspannseil 2 doppelt ausgeführt ist.

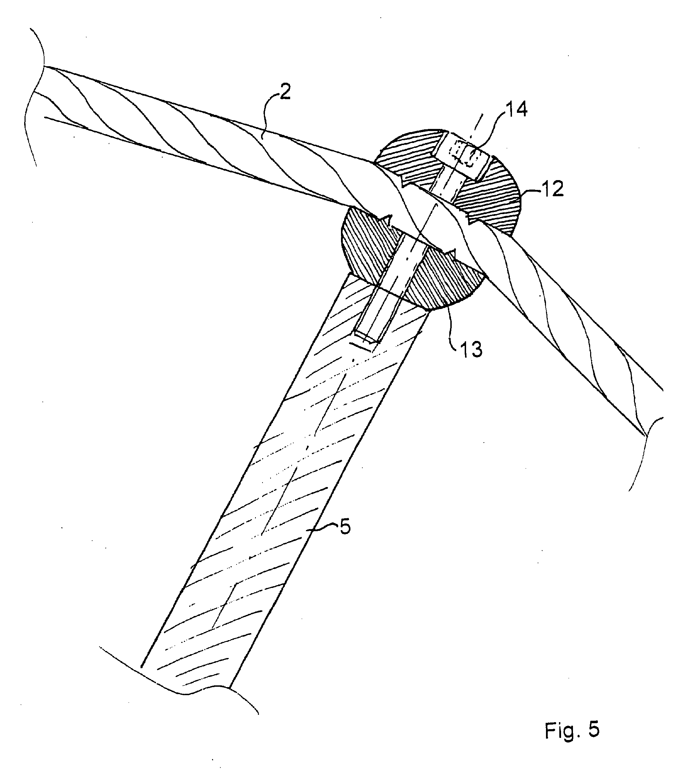

Die Seilfixierung 6 ist in Fig. 5 in schematischer Schnittdarstellung gezeigt. Zwischen einem Oberteil 12 und einem Unterteil 13 werden die beiden parallel verlaufenden Abspannseile 2 mittels eines Gewindebolzens 14 im Spreizstab 5 fest verschraubt. Durch eine Lockerung des Pressdruckes zwischen dem Oberteil 12 und dem Unterteil 13 lässt sich der Fixierungspunkt des Spreizstabes 5 auf den Abspannseilen 2 verschieben.

### Bezugszeichenliste

- 1: Stützmast
- 2: Abspannseil
- 3: Toppunkt
- 4: Seilspreizvorrichtung (Seilspreizung)
- 5: Spreizstab
- 6: Seilfixierung
- 7: Mastfixierung
- 8: Stabverlängerung
- 9: Spannmanschette
- 10: Drehpunkt
- 11: Spreizstabhalterung
- 12: Oberteil
- 13: Unterteil
- 14: Gewindebolzen
- 15: Bodenseilspanner

## Patentansprüche

1. Seilnetzwerk mit außen verlaufenden Abspannseilen (2), wobei die Abspannseile (2) in einem Toppunkt (3) eines innerhalb des Seilnetzwerkes angeordneten Stützmastes (1) spitz zulaufen,
**dadurch gekennzeichnet, dass**
das Seilnetzwerk mindestens eine, am Stützmast (1) und an mindestens einem Abspannseil (2) angeordnete Seilspreizvorrichtung (4) aufweist.

2. Seilnetzwerk nach Anspruch 1,
**dadurch gekennzeichnet, dass**
die Seilspreizvorrichtung (4) als ein am Stützmast (1) und am Abspannseil (2) fixierter Spreizstab (5) mit einer Seilfixierung (6) und einer Spreizstabhalterung (11) ausgebildet ist.

3. Seilnetzwerk nach Anspruch 2,
**dadurch gekennzeichnet, dass**
der Spreizstab (5) abspannseilseitig an der Seilfixierung (6) verschiebbar und stützmastseitig um einen Drehpunkt (10) der am Stützmast (1) befindlichen Spreizstabhalterung (11) gelenkig angeordnet ist.

4. Seilnetzwerk nach Anspruch 2 oder 3,
**dadurch gekennzeichnet, dass**
die Spreizstabhalterung (11) am Stützmast (1) verschiebbar fixiert ist.

5. Seilnetzwerk nach Anspruch 2 oder 3,
**dadurch gekennzeichnet, dass**
der Spreizstab (5) in axialer Richtung verlänger- und verkürzbar ausgebildet ist.

6. Seilnetzwerk nach einem der Ansprüche 1 bis 5,
**dadurch gekennzeichnet, dass**
zusätzlich eine unterhalb des Toppunktes (3) eine auf dem Stützmast (1) verschiebbare Seilspreizung (4) angeordnet ist, die eine Spannmanschette (9) und zwischen der Spannmanschette (9) und dem Abspannseil (2) geklemmte Spreizstäbe (5) aufweist.

## Claims

1. A rope network including guy ropes (2) which extend on the outside thereof, said guy ropes converging at an acute angle at a top point (3) of a support mast (1) arranged within the rope network,
**characterized in that**
the rope network includes at least one rope spreading device (4) which is arranged on the support mast (1) and at least on one guy rope (2).

2. A rope network according to claim 1,
**characterized in that**
the rope spreading device (4) is designed as a spreader rod (5) having a rope fixing element (6) and a spreader rod mounting (11), which spreader rod is fixed on the support mast (1) and on the guy rope (2).

3. A rope network according to claim 2,
**characterized in that**
the spreader rod (5) is slidably arranged on the rope fixing element (6) on the side of the guy rope, and on the side of the support mast is arranged such that it can be articulated about a pivot point (10) of the spreader rod mounting (11) located on the support mast (1).

4. A rope network according to claim 2 or 3,
**characterized in that**
the spreader rod mounting (11) is slidably fixed on the support mast (1).

5. A rope network according to claim 2 or 3,
**characterized in that**
the spreader rod (5) is designed such that it can be lengthened or shortened in the axial direction.

6. A rope network according to any one of claims 1 to 5,
**characterized in that**
an additional rope spreader(4) is slidably arranged on the support mast (1) below the top point (3), which rope spreader includes a tensioning sleeve (9) and spreader rods (5) which are clamped between the tensioning sleeve (9) and the guy rope (2).

## Revendications

1. Réseau de cordes avec haubans (2) s'étendant à l'extérieur, les haubans (2) se rejoignant en pointe en un point supérieur (3) d'un pylône (1) disposé à l'intérieur du réseau de cordes,
**caractérisé en ce que**
le réseau de cordes présente au moins un dispositif d'écartement des cordes (4) disposé sur le pylône (1) et sur au moins un hauban (2).

2. Réseau de cordes selon la revendication 1,
**caractérisé en ce que**
le dispositif d'écartement des cordes (4) est formé comme une tige d'écartement (5) fixée sur le pylône (1) et sur le hauban (2), avec une fixation de corde (6) et une fixation de tige d'écartement (11).

3. Réseau de cordes selon la revendication 2,
**caractérisé en ce que**
la tige d'écartement (5) est disposée de façon déplaçable sur la fixation de corde (6), du côté du hauban, et de façon articulée autour d'un point de rotation (10) de la fixation de tige d'écartement (11) se trouvant sur le pylône (1), du côté du pylône.

4. Réseau de cordes selon les revendications 2 ou 3,
**caractérisé en ce que**
la fixation de tige d'écartement (11) est fixée de façon déplaçable sur le pylône (1).

5. Réseau de cordes selon les revendications 2 ou 3,
**caractérisé en ce que**
la tige d'écartement (5) est formée de façon allongeable et raccourcissable en direction axiale.

6. Réseau de cordes selon l'une des revendications 1 à 5,
**caractérisé en ce que**
en outre, un écartement de corde (4) déplaçable sur le pylône (1) est disposé sous le point supérieur (3), lequel écartement présente un manchon de serrage (9) et des tiges d'écartement (5) coincées entre le manchon de serrage (9) et le hauban (2).
